# EUROPEAN PATENT APPLICATION

(11) **EP 2 072 282 A1**
(43) Date of publication of application: **24.06.2009**
(21) Application number: 08170811.7
(22) Date of filing: 05.12.2008
(51) Int. Cl.: B60C 1/00, C08K 5/39, C08L 7/00, C08L 21/00

(54) **Tire containing an internal cord reinforced rubber component**

(30) Priority: 17.12.2007 US 957537
(71) Applicant: The Goodyear Tire & Rubber Company, Akron, OH 44316-0001 (US)
(72) Inventor: Sandstrom, Erik Paul, Uniontown, OH 44685 (US); Sandstrom, Paul Harry, Cuyahoga Falls, OH 44223 (US); Miracle, Jeremy Elton, Wadsworth, OH 44281 (US); Busch, Warren James, North Canton, OH 44720 (US)
(74) Representative: Kutsch, Bernd

(57) **Abstract**

This invention relates to a tire having an internal component comprising a cord reinforced polyisoprene-based rubber composition containing silica reinforcement. Such cord reinforced rubber internal tire component may be, for example, at least one of a tire carcass ply, circumferential overlay ply and circumferential belt ply underlying its tread.

## Description

### Field of the Invention

This invention relates to a tire having an internal component comprising a cord reinforced polyisoprene-based rubber composition containing silica reinforcement. Such cord reinforced rubber internal tire component may be, for example, at least one of a tire carcass ply, a circumferential overlay ply or a circumferential belt ply underlying its tread.

### Background of the Invention

Pneumatic rubber tires conventionally contain various internal components contained within the tire in a form of cord-reinforced rubber composites, not visible surfaces of the tire, which are relied upon to reinforce and/or stabilize various aspects of the tire. Such internal components include, for example, a carcass ply, a circumferential belt ply which underlies the circumferential tread component of the tire and a circumferential overlay ply which also underlies the circumferential tire tread as being positioned between the tire tread and said belt ply.

It is sometimes desired to provide a tire with one or more of such internal components, or plies of cord reinforced, particularly wire reinforced, rubber composites, having a relatively low hysteresis while substantially maintaining other desirable physical properties in order to contribute to a reduction in a tire's rolling resistance and hence promoting a reduction in vehicular fuel consumption for an associated vehicle on which the tire is operationally mounted and for which it may be desired to promote improved durability for the tire.

For such purpose, a cord reinforced polyisoprene rubber composite is provided herein containing a relatively low particulate reinforcement content in a form of silica, preferably precipitated silica, reinforcement to promote an increase in its 100°C rebound physical property, thereby promoting a reduction in its hysteresis, as compared to a similar rubber composition reinforced with a relatively high reinforcement content, particularly where said reinforcement is reinforcement filler composed of rubber reinforcing carbon black.

Moreover, for this invention, it has been discovered that for such cord reinforced rubber composition, particularly for a wire reinforced polyisoprene-based rubber composition, the cure package for the composition is important.

Here, the rubber composition comprises silica reinforced cis 1,4-polyisoprene rubber, particularly natural rubber, the product of a methylene donor compound and methylene acceptor compound together with a specified cure package and optionally a cobalt salt.

The cure package of such cord coat rubber composition for an internal tire component comprises a combination of sulfur, a sulfenamide primary sulfur cure accelerator and a zinc dimethyldithiocarbamate secondary cure accelerator together with metaphenylene bismaleimide as a cure additive.

In the description of this invention, the term "phr" where used means "parts of material by weight per 100 parts by weight of rubber". The terms "rubber" and "elastomer" may be used interchangeably unless otherwise indicated. The terms "rubber composition" and "compound" may be used interchangeably unless otherwise indicated.

### Summary and Practice of the Invention

The invention relates to a tire according to claim 1.

Dependent claims refer to preferred embodiments of the invention.

In one aspect of this invention, a tire is provided having at least one internal component comprising cord reinforced rubber (said tire component thereby being primarily and preferably exclusive of an outer surface of the tire) the component comprising:
(A) a rubber composition comprising, based upon parts by weight per 100 parts by weight rubber (phr):
   (1) a cis 1,4-polyisoprene rubber, and
   (2) 20 to 60, alternately from 30 to 50, phr of reinforcing filler comprising:
      (a) silica or precipitated silica, and
      (b) from zero to 5, preferably zero, and alternately from 0.05 to 1 or 0.05 to 3, phr of rubber reinforcing carbon black;
   (3) a coupling agent for said silica having a moiety reactive with hydroxyl groups (e.g. silanol groups) on the preferably precipitated silica and another, preferably different moiety interactive with said polyisoprene rubber,
   (4) a resinous reaction product of a methylene donor and methylene acceptor compound preferably formed in situ within the rubber composition (i.e. formed from the reaction of said methylene donor and methylene acceptor within the rubber composition),
      wherein said methylene donor preferably comprises hexamethoxymethylmelamine, and
      wherein said methylene acceptor comprises at least one of unmodified phenol novolac resin and modified phenol novolac resin , rescorcinol and mixtures thereof;
   (5) a cobalt salt comprising at least one of cobalt naphthenate and cobalt neodecanoate in an amount of from 0.2 to 5 phr, alternately 0.3 to 3 phr, where the cord comprises at least one wire filament and in an amount of from zero to 5 phr, alternately 0.1 to 1 phr, where the cord comprises at least one non-wire filament, and
   (6) a cure package, exclusive of organoperoxides, comprising sulfur, a sulfenamide primary sulfur cure accelerator, a zinc dimethyldithiocarbamate secondary accelerator and a metaphenylene bismaleimide cure additive;
(B) at least one cord, preferably a plurality of parallel cords aligned substantially parallel to each other, encapsulated by said polyisoprene rubber composition,
wherein the cords individually comprise at least one filament, alternately a plurality of cabled (twisted together) filaments,
wherein said filament comprises at least one of
(1) a wire filament comprising at least one of steel filament, brass coated steel filament and bronze coated steel filament, or
(2) a non-wire filament comprising at least one of nylon filament, aramid filament, polyester filament, rayon filament and glass filament.

As previously mentioned, the tire internal component of cord reinforced/rubber composite may be, for example one or more of a carcass ply, circumferential belt ply and circumferential overlay ply.

It is considered herein that an internal tire component as a medium to heavy truck tire carcass ply is particularly useful and adaptable where the cord of said cord reinforced/natural rubber composite is a plurality of brass coated steel cords or bronze coated steel wires which may be aligned substantially parallel to each other, and for which such cord may be comprised of a plurality of brass coated or bronze coated steel filaments.

In practice, the amount of the methylene donor compound, namely the methylene donor comprising hexamethoxymethylmelamine, may vary from, for example 0.5 to 4 phr.

The term "methylene acceptor" is known to those having skill in such art and is used to describe the reactant, or compound with which the methylene donor compound reacts to form what is believed to be an intermediate methylol monomer. It is envisioned that a condensation of the intermediate methylol monomer by formation of a methylene bridge produces a resin material. The initial reactant for which it is envisioned contributes the moiety that later forms the methylene bridge and ultimately the resin is referred to as being the methylene donor compound and the other reactant is referred to as being the methylene acceptor compound. As previously indicated, representative compounds which may be used as a methylene acceptor include phenol novolac resins, including modified phenol novolac resins. Various methylene acceptors are mentioned in, for example, US-A- 6,605,670, US-A-A- 6,472,457, US-A- 5,945,500, US-A- 5,936,056, US-A- 5,688,871, US-A-5,665,799, US-A- 5,504,127, US-A- 5,405,897, US-A- 5,244,725, US-A- 5,206,389, US-A- 5,194,513, US-A- 5,030,692, US-A- 4,889,481, US-A- 4,605,696, US-A-4,436,853 and US-A- 4,092,455. Examples of modified novolac resins include, for example, cashew nut shell oil and alkyl modified phenol novolac resin such as, for example, SP6700™.

The amount of methylene acceptor compound in the rubber composition may vary, depending somewhat upon the amount of methylene donor compound used as well as the selection of the methylene acceptor compound itself and a desired ratio of methylene donor compound to methylene acceptor compound. For example, the amount of methylene acceptor compound, as a component of said resinous reaction product of said methylene donor and methylene acceptor, may be in a range of from 0.5 to 5, alternatively from 1 to 3 phr.

A weight ratio of the methylene acceptor compound to methylene donor compound may range, for example, from 5/1 to 1/5.

In practice, as indicated, the cobalt salt comprises at least one of cobalt neodecanoate and cobalt naphthenate.

The amount of cobalt salt in the rubber composition may vary considerably. For example, for a wire coat rubber composition where the cord comprises at least one wire filament, it may range from 0.2 to 5 phr. However, in a non-wire rubber coat composition where the cord comprises at least one non-wire filament, particularly without the presence of a wire filament in the cord, it may range from zero to 5 phr.

In practice, representative of sulfenamide primary sulfur cure accelerators for this invention are comprise cyclohexyl benzothiazole sulfenamide, tertiary butyl benzothiazole sulfenamide or dicyclohexyl benzothiazole sulfenamide. Primary sulfur cure accelerators comprising cyclohexyl benzothiazole sulfenamide or tertiary butyl benzothiazole sulfenamide are preferred.

In practice, it is preferred that the polyisoprene based rubber composition has a hot cured rebound property (100°C) in a range of from 65 to 85, alternately from 70 to 80.

In practice, it is desired that said polyisoprene based rubber composition of said rubber/cord composite, so long as it has said hot rebound property (100°C) in a range of from 65 to 85, alternately from 70 to 80, has a dynamic storage modulus (G') at a low strain (10 percent) and 100°C in a range of from 1500 to 3000 MPa, and a Shore A hardness (100°C) in a range of from 60 to 75. It may also be desired that said rubber composition has a tan delta at low strain (10 percent) and 60°C in a range of from 0.05 to 0.15.

In practice, it is desired that the precipitated silica reinforcement-containing polyisoprene-based rubber composition contains only a minimal amount of rubber reinforcing carbon black if any. One source of the minimal amount of carbon black may be as a carrier for the sulfur coupling agent. In any event, the low level of carbon black which may be present in the polyisoprene rubber composition is desired to be less than an effective rubber reinforcing amount.

A significance of requiring the rubber of the rubber composition of the cord reinforced rubber composite to be polyisoprene rubber, namely cis 1,4-polyisoprene rubber in a form of synthetic or natural polyisoprene rubber, is to promote a relatively high tear strength property and good processability in combination with promoting a relatively low hysteresis (relatively high hot rebound property) for the rubber composition.

A significance of using a combination of methylene donor compound and methylene acceptor compound for the rubber composition of the cord reinforced rubber composite is considered herein to be beneficial to promote high low strain stiffness (G' storage modulus at 10 percent strain at 100°C) values for the rubber composition and good adhesion of the rubber composition to the reinforcing cord.

A significance of using the cobalt salt, particularly comprised of the cobalt naphthenate, for the rubber composition of the cord reinforced rubber composite is considered herein to be beneficial to promote good cord adhesion particularly where brass or bronze coated steel wire is used for the cord.

A significance of using precipitated silica reinforcement, in combination with a silica coupling agent, (in the absence of, or in the presence of only a minimal content of rubber reinforcing carbon black) is considered herein to be beneficial to promote low hysteresis and good tear strength for the rubber composition of the composite.

A significance of using the aforesaid cure package (sulfur cure combination of ingredients) for the polyisoprene rubber composition composed of cure package, exclusive of organoperoxides, sulfur, sulfenamide primary sulfur cure accelerator, zinc dimethyldithiocarbamate secondary accelerator and metaphenylene bismaleimide cure additive is to achieve a faster initial cure rate for the rubber composition while also providing a cord reinforced rubber component for a tire with a rubber composition having a relatively low hysteresis (suitably high 100°C rebound value), while substantially maintaining other desirable physical properties including cord adhesion and tear resistance, in order to contribute to a reduction in a tire's rolling resistance and hence promoting a reduction in vehicular fuel consumption for an associated vehicle on which the tire is operationally mounted and for which it may be desired to promote improved durability for the tire.

While any single one of the indicated ingredients in the tire component composite of cord reinforced rubber composition are known materials for use in various rubber compositions, a significant aspect of this invention is the required use of the combination of the ingredients for the cord reinforced polyisoprene rubber composition as an internal component of a tire, particularly a pneumatic rubber tire and particularly the inclusion of the aforesaid sulfur cure package to establish the desired cure rate.

The practice of this invention is further illustrated by reference to the following examples. Unless otherwise indicated, all parts and percentages are by weight.

### EXAMPLE I

Rubber samples were prepared to evaluate polyisoprene rubber based coated cord reinforcement for tire components, particularly for wire reinforced rubber carcass plies and wire reinforced circumferential rubber belt plies.

In the complexity of the presence of a combination of methylene donor and acceptor compounds in a cord reinforced rubber composition, as well as a cobalt salt for a wire coat rubber composition, the formulation of a suitable sulfur based cure package for the rubber composition is evaluated which presents a suitable rubber sulfur cure rate and which has appropriate physical properties.

The rubber samples are referred to herein as Samples A through E.

Rubber Sample A is considered as being a Control Sample A which used a sulfur based cure package comprised of sulfur, primary sulfenamide cure accelerator (without a secondary cure accelerator) and metaphenylene bismaleimide cure additive.

Rubber Samples B and C contained the sulfur cure package to which a conventional secondary sulfur cure accelerator as benzothiazyl disulfide was added to the primary sulfenamide cure accelerator to promote a faster initial rate of cure for the rubber composition.

Rubber Samples D and E contained the sulfur cure package to which a secondary sulfur cure accelerator as zinc dimethyldithiocarbamate, instead of the aforesaid benzothiazyl disulfide secondary accelerator, was added to the primary sulfenamide cure accelerator to promote a faster initial rate of cure for the rubber composition.

At the outset, it was not known whether promoting a faster initial rate of cure of the rubber composition would enable preparation of a cord coat rubber composition with advantageous physical properties for a tire component such as, for example, hardness, rebound (e.g. hysteresis for associated vehicular fuel economy) and cord adhesion.

The rubber compositions were prepared by blending the ingredients in an internal rubber mixer in a series of sequential mixing steps while sheeting out the rubber mixtures and cooling to a temperature below 40°C between mixing steps. The sequential mixing steps were comprised of a first non-productive mixing step followed by a second non-productive mixing step and thence by a productive mixing step (in which sulfur and accelerators were added).

The basic formulation for the rubber Samples A through E is presented in the following Table 1 in terms of parts by weight.

**Table 1**

| ***First Non-Productive Mixing Step (NP1)*** | **Parts** |
|---|---|
| Natural cis 1,4-polyisoprene rubber¹ | 100 |
| Precipitated silica² | 45 |
| Silica coupling agent/carbon black composite (50/50)³ | 6 |
| Zinc oxide | 4 |
| Fatty acid⁴ | 1 |
| Methylene acceptor (can alternately be added in productive stage)5 | 2 |

| ***Second Non-Productive Mixing Step (NP2)*** | |
|---|---|
| Cobalt salt⁶ | 0.5 |

| ***Productive Mixing Step (P)*** | |
|---|---|
| Methylene donor⁷ | 2.8 |
| Antidegradant⁸ | 0.8 |
| Zinc oxide | 3 |
| Sulfur, insoluble sulfur, 80% active | 5 |
| Sulfenamide primary accelerator⁹ | 1.1 |
| Metaphenylene bismaleimide cure additive¹⁰ | 2 |
| Benzothiazyl disulfide secondary accelerator | 0 - 0.5 |
| Zinc dimethyldithiocarbamate secondary accelerator | 0 - 1 |

| | |
|---|---|
| ¹TSR10 natural rubber ²Precipitated silica as HiSil 210™ from PPG Industries ³Silica coupling agent as a bis(3-triethoxysilylpropyl) polysulfide, understood to have an average of from about 2.2 to about 2.5 connecting sulfur atoms in its polysulfidic bridge, provided as Si266™ from Degussa as a composite of the silica coupler and carbon black (believed to be N330 or similar carbon black) in a 50/50 weight ratio and reported in the Table as the composite. ⁴Primarily stearic acid (e.g. at least 90 weight percent stearic acid) as a blend of stearic, palmitic and oleic acids ⁵Cashew nut shell oil modified phenol novolac resin as SP6700™ from Schenectady ⁶Cobalt naphthenate, 10.5 percent by weight cobalt ⁷Hexamethoxymethylmelamine ⁸Wingstay 100™ from The Goodyear Tire & Rubber Company ⁹Cyclohexyl benzothiazole sulfenamide ¹⁰Metaphenylene bismaleimide as HVA-2™ from DuPont | |

The following Table 2 illustrates cure behavior and various physical properties of rubber Samples A through E based upon the basic formulation of Table 1.

**Table 2**

| | **Control** A | **Samples** | | | |
|---|---|---|---|---|---|
| ***Secondary Accelerators*** | | B | C | D | E |
| Benzothiazyl disulfide | 0 | 0.25 | 0.5 | 0 | 0 |
| Zinc dimethyldithiocarbamate | 0 | 0 | 0 | 0.5 | 1 |

| **Properties** | | | | | |
|---|---|---|---|---|---|
| ***Rheometer, 150°C (MDR)¹*** | | | | | |
| Maximum torque (dNm) | 27.4 | 28.5 | 29.2 | 26.8 | 25.6 |
| Minimum torque (dNm) | 2.4 | 2.4 | 2.3 | 2.2 | 2.3 |
| Delta torque (dNm) | 25.1 | 26.2 | 26.9 | 24.6 | 23.3 |
| T25, minutes | 8.2 | 7.6 | 6.7 | 7.8 | 7 |

| ***A TS, 32 min, 150°C²*** | | | | | |
|---|---|---|---|---|---|
| Tensile strength (MPa) | 22.8 | 22.7 | 22 | 23 | 22.7 |
| Elongation at break (%) | 505 | 490 | 465 | 505 | 518 |
| 300% modulus, ring (MPa) | 12.6 | 13.2 | 13.9 | 12.7 | 11.9 |
| Rebound, 100°C | 66 | 68 | 68 | 68 | 67 |
| Shore A hardness, 100°C | 69 | 70 | 72 | 69 | 68 |
| Tear strength, (N) at 95°C³ | 101 | 84 | 51 | 110 | 135 |

| ***RPA, 100°C⁴*** | | | | | |
|---|---|---|---|---|---|
| Storage modulus G' at 10% strain (kPa) | 2546 | 2426 | 2587 | 2281 | 2290 |
| Tan delta at 10% strain | 0.140 | 0.136 | 0.136 | 0.14 3 | 0.13 5 |

| ***Wire cord adhesion⁵ 32 minutes at 150°C, (N)*** | | | | | |
|---|---|---|---|---|---|
| 23°C | 816 | 575 | 589 | 749 | 785 |
| Rubber coverage of the wire (%)⁶ | 90 | 50 | 50 | 90 | 90 |

| | | | | | |
|---|---|---|---|---|---|
| ¹Data obtained according to Moving Die Rheometer instrument, model MDR-2000 by Alpha Technologies, used for determining cure characteristics of elastomeric materials, such as for example Torque and T25. ²Data obtained according to Automated Testing System instrument by the Instron Corporation which incorporates six tests in one system. Such instrument may determine ultimate tensile, ultimate elongation and moduli. ³Data obtained according to a peel strength adhesion test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument. The area of contact at the interface between the rubber samples is facilitated by placement of a Mylar^{™} film between the samples with a cut-out window in the film to enable the two rubber samples to contact each other following which the samples are vulcanized together and the resultant composite of the two rubber compositions are used for the peel strength test. ⁴Data obtained according to Rubber Process Analyzer as RPA 2000™ instrument by Alpha Technologies, formerly the Flexsys Company and formerly the Monsanto Company. References to an RPA-2000 instrument may be found in the following publications: H.A. Palowski, et al, Rubber World, June 1992 and January 1997, as well as Rubber & Plastics News, April 26 and May 10, 1993. ⁵Standard wire and textile cord adhesion test (SWAT) conducted by embedding brass coated wire cord in the rubber composition. The rubber/cord samples were then cured at the indicated temperatures. The respective cords in the rubber samples were subjected to a pull-out test according to ASTM D2229-73. The results of the pull-out tests are expressed in Newtons. ⁶Percentage of rubber coverage of the wire cord where 100 percent coverage is desirable. | | | | | |

First, it can be seen from Table 2 that the initial cure rate (T25) of the Control Sample A using the primary sulfenamide cure accelerator without a secondary accelerator was too slow (8.2 minutes) to be considered herein to be practical, although the indicated resultant physical properties are considered as being satisfactory for a wire coat rubber composition. The T25 value is the time in minutes to reach about 25 percent of an optimum degree of cure based on torque values, which is an excepted evaluation procedure for a T25 value. A slow T25 initial cure rate is not normally desired in a sense of increasing the time required before the tire can be removed from the curing press.

Accordingly, it was decided to add a conventional benzothiazyl disulfide secondary cure accelerator in combination with the primary accelerator for Samples B and C to speed up the initial cure rate (decrease the T25 time) of the rubber composition.

It can be seen from Samples B and C of Table 2 (which used the added benzothiazyl disulfide secondary accelerator) that, as expected, the T25 initial cure time was suitably reduced (initial cure rate increased). However, several physical properties were significantly negatively affected including the tear strength, wire adhesion and rubber coverage of the wire as compared to the Control Sample A.

It was then decided to evaluate the use of zinc dimethyldithiocarbamate as a secondary cure accelerator, instead of the benzothiazyl disulfide, in combination with the sulfenamide primary cure accelerator.

It can be seen from Table 2 that rubber Samples D and E (which used the added zinc dimethyldithiocarbamate secondary accelerator instead of the benzothiazyl disulfide) provided, as expected, faster initial cure rate (a reduced T25 initial cure time) for the rubber composition. Moreover, it was discovered that several resultant physical properties were substantially equal to or positively affected, including the tear strength, wire adhesion and rubber coverage of the wire as compared to the Control Sample A which used only the primary sulfenamide cure accelerator.

Accordingly, it is concluded herein that a suitably faster initial cure rate (reduced T25 time) for the rubber composition was unexpectedly and unpredictably achieved without loss of significant cured properties of the rubber Samples D and E when the zinc dimethyldithiocarbamate was used as a secondary sulfur cure accelerator instead of the benzothiazyl disulfide.

This is seen herein to justify the significant discovery of use of the sulfur package comprising sulfur, sulfenamide primary sulfur cure accelerator, zinc dimethyldithiocarbamate secondary accelerator and metaphenylene bismaleimide cure additive for the polyisoprene rubber based rubber composition for a cord rubber coat which contained the product of a methylene donor and methylene acceptor, together with the cobalt salt for wire reinforcement.

## Claims

1. A tire having at least one internal cord reinforced rubber component, the rubber component comprising:
(A) a rubber composition comprising, based upon parts by weight per 100 parts by weight rubber (phr):
(1) a cis 1,4-polyisoprene rubber, and
(2) 20 to 60 phr of a reinforcing filler comprising:
(a) silica, and
(b) from zero to 5 phr of rubber reinforcing carbon black;
(3) a coupling agent for said silica having a moiety reactive with hydroxyl groups on said silica and another moiety interactive with said polyisoprene rubber,
(4) a resinous reaction product of a methylene donor and a methylene acceptor compound,
wherein said methylene donor preferably comprises hexamethoxymethylmelamine, and
wherein said methylene acceptor comprises at least one of unmodified phenol novolac resin and modified phenol novolac resin , rescorcinol and mixtures thereof;
(5) a cure package, exclusive of organoperoxide, comprising sulfur, a sulfenamide primary sulfur cure accelerator, a zinc dimethyldithiocarbamate secondary accelerator and metaphenylene bismaleimide cure additive; and
(B) cords encapsulated by said polyisoprene rubber composition.

2. The tire of claim 1 wherein the cords comprise at least one filament, wherein said filament comprises:
(1) wire filament comprising at least one of steel filament, brass coated steel filament and bronze coated steel filament, or
(2) non-wire filament comprising at least one of nylon filament, aramid filament, polyester filament, rayon filament and glass filament.

3. The tire of claim 1 or 2 wherein the resinous reaction product is formed in situ within the rubber composition.

4. The tire of at least one of the previous claims wherein the rubber composition comprises a cobalt salt comprising at least one of cobalt naphthenate and cobalt neodecanoate in an amount of from 0.2 to 5 phr where the cord comprises at least one wire filament and from 0 to 5 phr where the cords comprise at least one non-wire filament.

5. The tire of at least one of the previous claims wherein the cords comprise at least one of a steel filament, a brass coated steel filament and a bronze coated steel filament and wherein said cobalt salt is present in an amount of from 0.2 to 5 phr.

6. The tire of at least one of the previous claims wherein the cords comprise at least one of nylon filament, aramid filament, polyester filament, rayon filament and glass filament and wherein said cobalt salt is present in an amount of from zero to about 5 phr.

7. The tire of at least one of the previous claims wherein said sulfenamide primary accelerator comprises cyclohexyl benzothiazole sulfenamide, tertiary butyl benzothiazole sulfenamide or dicyclohexyl benzothiazole sulfonamide.

8. The tire of at least one of the previous claims wherein said polyisoprene based rubber composition has a hot cured rebound property (100°C) in a range of from 65 to 85.

9. The tire of at least one of the previous claims wherein the cords are composed of a plurality of twisted filaments.

10. The tire of at least one of the previous claims wherein the cords of said cord reinforced rubber composite are a plurality of cords aligned substantially parallel to each other.

11. The tire of at least one of the previous claims wherein said tire component is an internal tire component selected from at least one of carcass ply, circumferential belt ply underlying a circumferential tire tread and overlay ply underlying a circumferential tire tread.

12. The tire of at least one of the previous claims wherein said rubber composition has a dynamic storage modulus (G') at a 10 percent strain and 100°C in a range of from 1500 to 3000 MPa, and a Shore A hardness (100°C) in a range of from 60 to 75.
